# EUROPEAN PATENT APPLICATION

(11) **EP 4 546 721 A1**
(43) Date of publication of application: **30.04.2025**
(21) Application number: 23856253.2
(22) Date of filing: 26.06.2023
(51) Int. Cl.: H04L 12/40

(54) **INFORMATION SENDING METHOD, INFORMATION RECEIVING METHOD, AND COMMUNICATION APPARATUS AND SYSTEM**

(30) Priority: 24.08.2022 CN 202211020745
(71) Applicant: Huawei Technologies Co., Ltd., Shenzhen, Guangdong 518129 (CN)
(72) Inventor: WANG, Rong, Shenzhen, Guangdong 518129 (CN); XIE, Zichen, Shenzhen, Guangdong 518129 (CN); FAN, Wei, Shenzhen, Guangdong 518129 (CN)
(74) Representative: Maiwald GmbH
(86) International application number: PCT/CN2023/102513
(87) International publication number: WO 2024/041161

(57) **Abstract**

Embodiments of this application provide an information sending and receiving method and a communication apparatus and system, so that a scanner can still normally complete access when the scanner needs to access a large quantity of advertisers. The method includes: A first device generates an advertising message, and sends the advertising message to a second device. The advertising message includes first indication information, and the first indication information indicates a role expected by the first device. The role expected by the first device is a grant node or a terminal node.

## Description

This application claims priority to Chinese Patent Application No. 202211020745.5, filed with the China National Intellectual Property Administration on August 24, 2022 and entitled "INFORMATION SENDING AND RECEIVING METHOD AND COMMUNICATION APPARATUS AND SYSTEM", which is incorporated herein by reference in its entirety.

### TECHNICAL FIELD

This application relates to the field of short-range communication, and in particular, to an information sending and receiving method and a communication apparatus and system.

### BACKGROUND

In a Bluetooth (Bluetooth, BT) communication system, devices in the communication system may be classified into an advertiser (advertiser) and a scanner (scanner). The scanner receives, within a scan window (scan window), advertising information sent by the advertiser, and then establishes a connection to the advertiser. It is agreed in a conventional Bluetooth protocol that a scanner is used as a grant node (grant node, G node) and an advertiser is used as a terminal node (terminal node, T node). The G node manages the T node, and is responsible for allocating an air interface resource to the T node. The T node complies with scheduling of the G node and communicates with the G node by using the air interface resource allocated by the G node.

Currently, the scanner needs to ensure that a scan window covers at least one advertising interval (advertising interval), so that the scanner can receive advertising information from the advertiser, to complete access. However, after the scanner needs to access a large quantity of advertisers, because a time resource allocated by the scanner to the scan window is limited, a probability of receiving the advertising information by the scanner is reduced. Consequently, a probability of accessing the advertiser by the scanner is reduced. If an advertising frequency of the advertiser is increased, the probability of receiving the advertising information by the scanner can be increased, but this increases power consumption of the advertiser. Therefore, how to enable the scanner to still normally complete access when the scanner needs to access the large quantity of advertisers is an urgent problem to be resolved currently.

### SUMMARY

Embodiments of this application provide an information sending and receiving method and a communication apparatus and system, so that a scanner can still normally complete access when the scanner needs to access a large quantity of advertisers.

To achieve the foregoing objective, the following technical solutions are used in embodiments of this application.

According to a first aspect, an information sending method is provided. The method may be performed by a first device, or may be performed by a component of the first device, for example, a processor, a chip, or a chip system of the first device, or may be implemented by a logical module or software that can implement all or some functions of a first device. The following uses an example in which the method is performed by the first device for description. The method includes: The first device generates an advertising message, and sends the advertising message to a second device. The advertising message includes first indication information, and the first indication information indicates a role expected by the first device. The role expected by the first device is a grant node (G node) or a terminal node (T node). In this embodiment of this application, an advertiser (the first device) sends, to a scanner (the second device) by using the first indication information in the advertising message, the role expected by the advertiser, and therefore can notify the scanner of the role expected by the advertiser when the scanner accesses the advertiser through advertising. Further, the advertiser can be allowed to become the G node, and the scanner can be allowed to become the T node. In this way, after becoming the T node, the scanner does not need to use an air interface resource of the scanner to allocate a corresponding air interface resource to the advertiser. This can alleviate a case that the air interface resource of the scanner is in a high-proportion state because the scanner accesses a large quantity of advertisers, so that the scanner can still normally complete access after accessing the large quantity of advertisers. In addition, when the air interface resource of the scanner is in the high-proportion state, the scanner can further access more advertisers.

With reference to the first aspect, in a possible implementation, the method further includes: The first device receives an access request message from the second device, where the access request message is used by the second device to request to access the first device; and the first device sends an access response message to the second device, where the access response message indicates that the second device succeeds in access or fails in access.

With reference to the first aspect, in a possible implementation, the method further includes: When the first device does not receive the access request message from the second device on a first time resource, the first device determines that a connection between the first device and the second device fails. In other words, in this embodiment of this application, the first device may determine, by identifying whether the access request message from the second device is received within specified duration, whether the first device is successfully connected to the second device.

According to a second aspect, an information receiving method is provided. The method may be performed by a second device, or may be performed by a component of the second device, for example, a processor, a chip, or a chip system of the second device, or may be implemented by a logical module or software that can implement all or some functions of a second device. The following uses an example in which the method is performed by the second device for description. The method includes: The second device receives an advertising message from a first device. The advertising message includes first indication information, and the first indication information indicates a role expected by the first device. The role expected by the first device is a G node or a T node. In this embodiment of this application, an advertiser (the first device) sends, to a scanner (the second device) by using the first indication information in the advertising message, the role expected by the advertiser, and therefore can notify the scanner of the role expected by the advertiser when the scanner accesses the advertiser through advertising. Further, the scanner can be allowed to become the T node, and the advertiser can be allowed to become the G node. In this way, after becoming the T node, the scanner does not need to use an air interface resource of the scanner to allocate a corresponding air interface resource to the advertiser. This can alleviate a case that the air interface resource of the scanner is in a high-proportion state because the scanner accesses a large quantity of advertisers, so that the scanner can still normally complete access after accessing the large quantity of advertisers. In addition, when the air interface resource of the scanner is in the high-proportion state, the scanner can further access more advertisers.

With reference to the second aspect, in a possible implementation, the method further includes: When the second device determines, based on the advertising message, to request to access the first device, the second device sends an access request message to the first device on a first time resource, where the access request message is used by the second device to request to access the first device; and the second device receives an access response message from the first device, where the access response message indicates that the second device succeeds in access or fails in access.

With reference to the second aspect, in a possible implementation, the method further includes: When the second device does not receive the access response message from the first device on a second time resource, the second device determines that a connection between the second device and the first device fails. In other words, in this embodiment of this application, the second device may determine, by identifying whether the access response message from the first device is received within specified duration, whether the first device is successfully connected to the second device.

With reference to the first aspect or the second aspect, in a possible implementation, the access request message includes second indication information, and the second indication information indicates a role expected by the second device. The role expected by the second device is the G node or the T node. To be specific, in this embodiment of this application, the first device may explicitly notify the second device of the role expected by the first device, and the second device may explicitly notify the first device of the role expected by the second device.

With reference to the first aspect or the second aspect, in a possible implementation, when the role expected by the second device is different from the role expected by the first device, the access response message indicates that the second device succeeds in access as the role expected by the second device. In other words, in this embodiment of this application, when the first device explicitly notifies the second device of the role expected by the first device, and the second device explicitly notifies the first device of the role expected by the second device, if the role expected by the first device does not conflict with the role expected by the second device, the second device may succeed in access as the role expected by the second device.

With reference to the first aspect or the second aspect, in a possible implementation, when the role expected by the second device is the same as the role expected by the first device, the access response message indicates that the second device succeeds in access as the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and the first device agrees to become a role other than the role expected by the first device, the second device may succeed in access as the role expected by the second device.

For example, if both the role expected by the first device and the role expected by the second device are the G node, and the access response message indicates that the second device succeeds in access as the role expected by the second device, the first device becomes the T node. If both the role expected by the first device and the role expected by the second device are the T node, and the access response message indicates that the second device succeeds in access as the role expected by the second device, the first device becomes the G node.

With reference to the first aspect or the second aspect, in a possible implementation, when the role expected by the second device is the same as the role expected by the first device, the access response message indicates that the second device fails in access as the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and the first device does not agree that the second device becomes the role expected by the second device, the second device fails in access as the role expected by the second device.

Optionally, that the access response message indicates that the second device fails in access as the role expected by the second device may mean that the second device fails to access the first device, or may mean that the second device accesses the first device as a role other than the role expected by the second device.

For example, accessing the first device as the role other than the role expected by the second device is used as an example to describe a case that the second device fails in access as the role expected by the second device. If both the role expected by the first device and the role expected by the second device are the G node, the second device accesses the first device as the T node. If both the role expected by the first device and the role expected by the second device are the T node, the second device accesses the first device as the G node.

With reference to the first aspect or the second aspect, in a possible implementation, the first indication information further indicates whether the role expected by the first device is negotiable. The first indication information can be used to determine whether the role expected by the first device is negotiable. Therefore, the second device can determine, based on the first indication information, whether to send the access request message to the first device. For example, when the role expected by the first device is the same as a role expected by the second device, and the first indication information indicates that the role expected by the first device is non-negotiable, the second device can determine not to send the access request message to the first device. In this way, signaling overheads and power consumption can be reduced.

With reference to the first aspect or the second aspect, in a possible implementation, the first indication information may further indicate a role that the first device expects the second device to become. In other words, the first device may notify, by using the first indication information in the advertising message, the second device of the role that the first device expects, when the second device accesses the first device through advertising, the second device to become.

With reference to the first aspect or the second aspect, in a possible implementation, the access request message includes third indication information. The third indication information indicates a role expected by the second device and whether the role expected by the second device is negotiable. The role expected by the second device is the G node or the T node. To be specific, in this embodiment of this application, the first device may explicitly notify the second device of the role expected by the first device and whether the role is negotiable, and the second device may explicitly notify the first device of the role expected by the second device and whether the role is negotiable.

With reference to the first aspect or the second aspect, in a possible implementation, the third indication information may further indicate a role that the second device expects the first device to become. In other words, the second device may notify, by using the third indication information in the access request message, the role that the second device expects, when the first device establishes the connection to the second device, the first device to become.

With reference to the first aspect or the second aspect, in a possible implementation, when the role expected by the second device is different from the role expected by the first device, the access response message indicates that the second device succeeds in access as the role expected by the second device. In other words, in this embodiment of this application, when the first device explicitly notifies the second device of the role expected by the first device, and the second device explicitly notifies the first device of the role expected by the second device, if the role expected by the first device does not conflict with the role expected by the second device, the second device may succeed in access as the role expected by the second device.

With reference to the first aspect or the second aspect, in a possible implementation, when the role expected by the second device is the same as the role expected by the first device, the role expected by the first device is non-negotiable, and the role expected by the second device is non-negotiable, the access response message indicates that the second device fails in access as the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and the role expected by the first device and the role expected by the second device are non-negotiable, the second device fails in access as the role expected by the second device.

With reference to the first aspect or the second aspect, in a possible implementation, when the role expected by the second device is the same as the role expected by the first device, the role expected by the first device is non-negotiable, and the role expected by the second device is negotiable, the access response message indicates that the second device succeeds in access as a role other than the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, the role expected by the first device is non-negotiable, and the role expected by the second device is negotiable, the second device succeeds in access as the role other than the role expected by the second device.

With reference to the first aspect or the second aspect, in a possible implementation, when the role expected by the second device is the same as the role expected by the first device, the role expected by the first device is negotiable, and the role expected by the second device is non-negotiable, the access response message indicates that the second device succeeds in access as the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and the role expected by the first device is negotiable, the second device may succeed in access as the role expected by the second device. In this embodiment of this application, the scanner and the advertiser are allowed to negotiate a G role and a T role. Therefore, the G role and the T role are set more flexibly in an access process, and an actual service requirement can be met.

With reference to the first aspect or the second aspect, in a possible implementation, when the role expected by the second device is the same as the role expected by the first device, the role expected by the first device is negotiable, and the role expected by the second device is negotiable, the access response message indicates that the second device succeeds in access as the role expected by the second device, or the access response message indicates that the second device succeeds in access as a role other than the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and both the role expected by the first device and the role expected by the second device are negotiable, the second device may succeed in access as the role expected by the second device, or the second device may succeed in access as the role other than the role expected by the second device.

With reference to the first aspect or the second aspect, in a possible implementation, when the role expected by the second device is the G node, the access request message further includes first connection information. The first connection information includes one or more of the following provided by the second device: a local clock, a time offset, an access address, a frequency hopping map, a cyclic redundancy check CRC code initial value, a connected state period, or connected state timeout duration.

With reference to the first aspect or the second aspect, in a possible implementation, when the access response message indicates that the second device succeeds in access as the role of the terminal node, the access response message further includes second connection information. The second connection information includes one or more of the following provided by the first device: a local clock, a time offset, an access address, a frequency hopping map, a CRC code initial value, a connected state period, or connected state timeout duration.

According to a third aspect, a communication apparatus is provided, configured to implement the foregoing method. The communication apparatus includes a corresponding module, unit, or means (means) for implementing the foregoing method. The module, the unit, or the means may be implemented by hardware or software, or implemented by hardware by executing corresponding software. The hardware or the software includes one or more modules or units corresponding to the foregoing functions.

With reference to the third aspect, in a possible implementation, the communication apparatus is a Bluetooth chip or a first device. The communication apparatus includes a transceiver and a processor. The processor is configured to generate an advertising message. The transceiver is configured to send the advertising message to a second device. The advertising message includes first indication information, and the first indication information indicates a role expected by the communication apparatus. The role expected by the communication apparatus is a G node or a T node.

With reference to the third aspect, in a possible implementation, the transceiver is further configured to receive an access request message from the second device. The transceiver is further configured to send an access response message to the second device. The access request message is used by the second device to request to access the first device. The access response message indicates that the second device succeeds in access or fails in access.

With reference to the third aspect, in a possible implementation, the access request message includes second indication information, and the second indication information indicates a role expected by the second device. The role expected by the second device is the G node or the T node.

With reference to the third aspect, in a possible implementation, when the role expected by the second device is different from the role expected by the communication apparatus, the access response message indicates that the second device succeeds in access as the role expected by the second device.

With reference to the third aspect, in a possible implementation, when the role expected by the second device is the same as the role expected by the communication apparatus, the access response message indicates that the second device succeeds in access as the role expected by the second device.

With reference to the third aspect, in a possible implementation, when the role expected by the second device is the same as the role expected by the communication apparatus, the access response message indicates that the second device fails in access as the role expected by the second device.

With reference to the third aspect, in a possible implementation, the first indication information further indicates whether the role expected by the communication apparatus is negotiable.

With reference to the third aspect, in a possible implementation, the access request message includes third indication information and the third indication information indicates a role expected by the second device and whether the role expected by the second device is negotiable. The role expected by the second device is the G node or the T node.

With reference to the third aspect, in a possible implementation, when the role expected by the second device is different from the role expected by the communication apparatus, the access response message indicates that the second device succeeds in access as the role expected by the second device.

With reference to the third aspect, in a possible implementation, when the role expected by the second device is the same as the role expected by the communication apparatus, the role expected by the communication apparatus is non-negotiable, and the role expected by the second device is non-negotiable, the access response message indicates that the second device fails in access as the role expected by the second device.

With reference to the third aspect, in a possible implementation, when the role expected by the second device is the same as the role expected by the communication apparatus, the role expected by the communication apparatus is non-negotiable, and the role expected by the second device is negotiable, the access response message indicates that the second device succeeds in access as a role other than the role expected by the second device.

With reference to the third aspect, in a possible implementation, when the role expected by the second device is the same as the role expected by the communication apparatus, the role expected by the communication apparatus is negotiable, and the role expected by the second device is non-negotiable, the access response message indicates that the second device succeeds in access as the role expected by the second device.

With reference to the third aspect, in a possible implementation, when the role expected by the second device is the same as the role expected by the communication apparatus, the role expected by the communication apparatus is negotiable, and the role expected by the second device is negotiable, the access response message indicates that the second device succeeds in access as the role expected by the second device, or the access response message indicates that the second device succeeds in access as a role other than the role expected by the second device.

With reference to the third aspect, in a possible implementation, the processor is further configured to: when the transceiver does not receive the access request message from the second device on a first time resource, determine that a connection between the communication apparatus and the second device fails.

With reference to the third aspect, in a possible implementation, when the role expected by the second device is the G node, the access request message further includes first connection information. The first connection information includes one or more of the following provided by the second device: a local clock, a time offset, an access address, a frequency hopping map, a CRC code initial value, a connected state period, or connected state timeout duration.

With reference to the third aspect, in a possible implementation, when the access response message indicates that the second device succeeds in access as the role of the T node, the access response message further includes second connection information. The second connection information includes one or more of the following provided by the communication apparatus: a local clock, a time offset, an access address, a frequency hopping map, a CRC code initial value, a connected state period, or connected state timeout duration.

For technical effects brought by any possible implementation of the third aspect, refer to technical effects brought by different implementations of the first aspect. Details are not described herein again.

According to a fourth aspect, a communication apparatus is provided, configured to implement the foregoing method. The communication apparatus includes a corresponding module, unit, or means (means) for implementing the foregoing method. The module, the unit, or the means may be implemented by hardware or software, or implemented by hardware by executing corresponding software. The hardware or the software includes one or more modules or units corresponding to the foregoing functions.

With reference to the fourth aspect, in a possible implementation, the communication apparatus is a Bluetooth chip or a second device. The communication apparatus includes a transceiver. The transceiver is configured to receive an advertising message from a first device. The advertising message includes first indication information, and the first indication information indicates a role expected by the first device. The role expected by the first device is a G node or a T node.

With reference to the fourth aspect, in a possible implementation, the communication apparatus further includes a processor. The transceiver is further configured to send an access request message to the first device when the processor determines, based on the advertising message, to request to access the first device. The transceiver is further configured to receive an access response message from the first device. The access request message is used by the communication apparatus to request to access the first device. The access response message indicates that the communication apparatus succeeds in access or fails in access.

With reference to the fourth aspect, in a possible implementation, the access request message includes second indication information, and the second indication information indicates a role expected by the communication apparatus. The role expected by the communication apparatus is the G node or the T node.

With reference to the fourth aspect, in a possible implementation, when the role expected by the communication apparatus is different from the role expected by the first device, the access response message indicates that the communication apparatus succeeds in access as the role expected by the communication apparatus.

With reference to the fourth aspect, in a possible implementation, when the role expected by the communication apparatus is the same as the role expected by the first device, the access response message indicates that the communication apparatus succeeds in access as the role expected by the communication apparatus.

With reference to the fourth aspect, in a possible implementation, when the role expected by the communication apparatus is the same as the role expected by the first device, the access response message indicates that the communication apparatus fails in access as the role expected by the communication apparatus.

With reference to the fourth aspect, in a possible implementation, the first indication information further indicates whether the role expected by the first device is negotiable.

With reference to the fourth aspect, in a possible implementation, the access request message includes third indication information, and the third indication information indicates a role expected by the communication apparatus and whether the role expected by the communication apparatus is negotiable. The role expected by the communication apparatus is the G node or the T node.

With reference to the fourth aspect, in a possible implementation, when the role expected by the communication apparatus is different from the role expected by the first device, the access response message indicates that the communication apparatus succeeds in access as the role expected by the communication apparatus.

With reference to the fourth aspect, in a possible implementation, when the role expected by the communication apparatus is the same as the role expected by the first device, the role expected by the first device is non-negotiable, and the role expected by the communication apparatus is non-negotiable, the access response message indicates that the communication apparatus fails in access as the role expected by the communication apparatus.

With reference to the fourth aspect, in a possible implementation, when the role expected by the communication apparatus is the same as the role expected by the first device, the role expected by the first device is non-negotiable, and the role expected by the communication apparatus is negotiable, the access response message indicates that the communication apparatus succeeds in access as a role other than the role expected by the communication apparatus.

With reference to the fourth aspect, in a possible implementation, when the role expected by the communication apparatus is the same as the role expected by the first device, the role expected by the first device is negotiable, and the role expected by the communication apparatus is non-negotiable, the access response message indicates that the communication apparatus succeeds in access as the role expected by the communication apparatus.

With reference to the fourth aspect, in a possible implementation, when the role expected by the communication apparatus is the same as the role expected by the first device, the role expected by the first device is negotiable, and the role expected by the communication apparatus is negotiable, the access response message indicates that the communication apparatus succeeds in access as the role expected by the communication apparatus, or the access response message indicates that the communication apparatus succeeds in access as a role other than the role expected by the communication apparatus.

With reference to the fourth aspect, in a possible implementation, the processor is further configured to: when the transceiver does not receive the access response message from the first device on a second time resource, determine that a connection between the communication apparatus and the first device fails.

With reference to the fourth aspect, in a possible implementation, when the role expected by the communication apparatus is the G node, the access request message further includes first connection information. The first connection information includes one or more of the following provided by the communication apparatus: a local clock, a time offset, an access address, a frequency hopping map, a CRC code initial value, a connected state period, or connected state timeout duration.

With reference to the fourth aspect, in a possible implementation, when the access response message indicates that the communication apparatus succeeds in access as the role of the T node, the access response message further includes second connection information. The second connection information includes one or more of the following provided by the first device: a local clock, a time offset, an access address, a frequency hopping map, a CRC code initial value, a connected state period, or connected state timeout duration.

For technical effects brought by any possible implementation of the fourth aspect, refer to technical effects brought by different implementations of the second aspect. Details are not described herein again.

According to a fifth aspect, a communication system is provided, including one or more communication apparatuses according to the third aspect and one or more communication apparatuses according to the fourth aspect.

According to a sixth aspect, a communication apparatus is provided, including a processor. The processor is configured to: being coupled to a memory, read computer instructions stored in the memory, and then perform the method according to the first aspect according to the instructions.

With reference to the sixth aspect, in a possible implementation, the communication apparatus further includes the memory. The memory is configured to store the computer instructions.

With reference to the sixth aspect, in a possible implementation, the communication apparatus further includes a communication interface. The communication interface is used by the communication apparatus to communicate with another device or apparatus. For example, the communication interface may be a transceiver, an input/output interface, an interface circuit, an output circuit, an input circuit, a pin, or a related circuit.

With reference to the sixth aspect, in a possible implementation, the communication apparatus may be a chip or a chip system. When the communication apparatus is a chip system, the communication apparatus may include a chip, or may include a chip and another discrete component.

According to a seventh aspect, a computer-readable storage medium is provided. The computer-readable storage medium stores instructions. When the instructions are run on a computer, the computer is enabled to perform the method according to the first aspect or the second aspect.

According to an eighth aspect, a computer program product including instructions is provided. When the computer program product runs on a computer, the computer is enabled to perform the method according to the first aspect or the second aspect.

For technical effects brought by any possible implementation of the fifth aspect to the eighth aspect, refer to technical effects brought by different implementations of the first aspect or the second aspect. Details are not described herein again.

### BRIEF DESCRIPTION OF DRAWINGS

FIG. 1 is a diagram of an advertising scanning procedure according to an embodiment of this application;
FIG. 2 is a diagram of an advertising access procedure according to an embodiment of this application;
FIG. 3 is a diagram of an architecture of a communication system according to an embodiment of this application;
FIG. 4 is a diagram 1 of a structure of a communication apparatus according to an embodiment of this application;
FIG. 5 is a schematic flowchart 1 of an information sending and receiving method according to an embodiment of this application;
FIG. 6 is a schematic flowchart 2 of an information sending and receiving method according to an embodiment of this application;
FIG. 7 is a schematic flowchart of accessing a first device by a second device according to an embodiment of this application; and
FIG. 8 is a diagram 2 of a structure of a communication apparatus according to an embodiment of this application.

### DESCRIPTION OF EMBODIMENTS

For ease of understanding the technical solutions provided in embodiments of this application, brief descriptions of related technologies or terms in this application are first provided. The brief descriptions are as follows.

### 1. Channel

The channel (channel, CH) is a path for transmitting a message between an advertiser and a scanner. The scanner and the advertiser may operate on an unlicensed frequency band, for example, an industrial, scientific, and medical (industrial scientific medical, ISM) frequency band. A 2.4 GHz (2400 MHz to 2483.5 MHz) frequency band in the ISM frequency band is used as an example. The 2.4 GHz frequency band may be divided into 40 channels, and an interval between two adjacent channels is 2 MHz. Indexes of the channels range from 0 to 39, CH37 to CH39 are advertising channels, and CH0 to CH36 are data channels. For related descriptions of the 40 channels, refer to Table 1.

**Table 1**

| Channel index | Center frequency (MHz) | Channel index | Center frequency (MHz) |
|---|---|---|---|
| 37 | 2402 | 18 | 2442 |
| 0 | 2404 | 19 | 2444 |
| 1 | 2406 | 20 | 2446 |
| 2 | 2408 | 21 | 2448 |
| 3 | 2410 | 22 | 2450 |
| 4 | 2412 | 23 | 2452 |
| 5 | 2414 | 24 | 2454 |
| 6 | 2416 | 25 | 2456 |
| 7 | 2418 | 26 | 2458 |
| 8 | 2420 | 27 | 2460 |
| 9 | 2422 | 28 | 2462 |
| 10 | 2424 | 29 | 2464 |
| 38 | 2426 | 30 | 2466 |
| 11 | 2428 | 31 | 2468 |
| 12 | 2430 | 32 | 2470 |
| 13 | 2432 | 33 | 2472 |
| 14 | 2434 | 34 | 2474 |
| 15 | 2436 | 35 | 2476 |
| 16 | 2438 | 36 | 2478 |
| 17 | 2440 | 39 | 2480 |

In this embodiment of this application, the advertiser and the scanner may alternatively operate on another frequency band. This is not specifically limited in embodiments of this application.

### 2. Advertising access

Advertising access may be a process in which a scanner discovers an advertiser by using an advertising message, initiates an access request to the advertiser based on the advertising message, and then establishes a connection to the advertiser.

It should be noted that the "advertiser" may also be referred to as an "advertising end" or an "advertising device", and the "scanner" may also be referred to as a "scanning end" or an "access device". This is collectively described herein, and details are not described below again.

An extended advertising manner of a Bluetooth communication system is used as an example. The advertising message may include an extended advertising packet (adv_ext_ind) and an extended data packet (aux_adv_ind). The extended advertising packet is used by the scanner to discover the advertiser and discover the extended data packet. The extended data packet may include capability information of the advertiser, so that the scanner determines whether to send the access request to the advertiser.

It should be understood that, in embodiments of this application, a location of the extended data packet may include a channel for transmitting the extended data packet, a time domain resource and/or a frequency domain resource for receiving the extended data packet, and the like. This is not specifically limited in embodiments of this application.

It should be understood that, in embodiments of this application, the capability information of the advertiser may include one or more of the following: a modulation scheme supported by the advertiser, a supported channel bandwidth, whether channel coding is supported, or the like. This is not specifically limited in embodiments of this application.

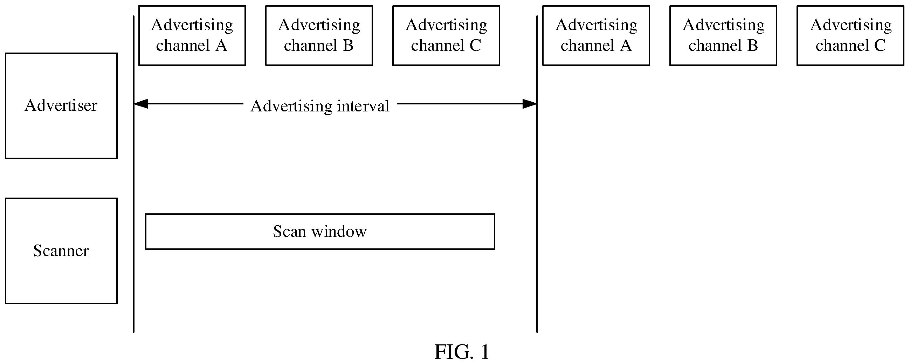

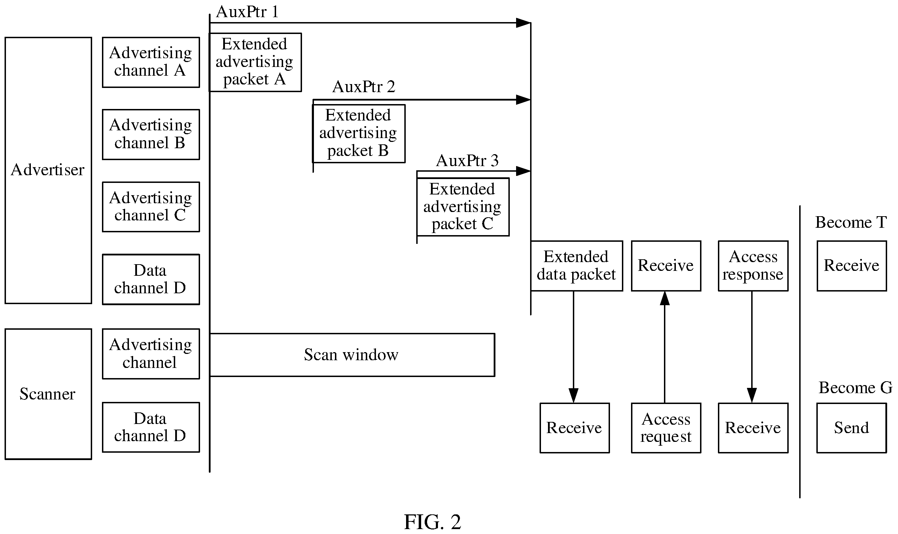

With reference to FIG. 1 and FIG. 2, the following describes an advertising access procedure by using an example.

FIG. 1 shows an advertising scanning procedure. As shown in FIG. 1, an advertiser sends an extended advertising packet within an advertising interval. Correspondingly, a scanner may receive the extended advertising packet from the advertiser in a scan window. The advertiser may send the extended advertising packet on one or more advertising channels. It may be understood that the scanner monitors, in the scan window, whether to receive an extended data packet from the advertiser, so that the scanner can avoid being always in a monitoring state, to reduce power consumption of the scanner.

For example, the advertiser sends the extended advertising packet on three advertising channels. The advertiser may sequentially send the extended advertising packet on an advertising channel A, an advertising channel B, and an advertising channel C. The advertiser sends an extended advertising packet A on the advertising channel A. Then, the advertiser sends an extended advertising packet B on the advertising channel B. Next, the advertiser sends an extended advertising packet C on the advertising channel C. The advertising channel A, the advertising channel B, and the advertising channel C each may be any advertising channel in the CH37 to the CH39 in Table 1. The three advertising channels are at least at an interval of 24 MHz, and there is a low probability that the three advertising channels are interfered with at the same time. Therefore, a probability that the scanner receives the extended advertising packet can be improved by sending the extended advertising packet on the three advertising channels in turn.

Optionally, in this embodiment of this application, the extended advertising packet may carry an auxiliary pointer (auxiliary pointer, AuxPtr). The AuxPtr indicates a location of the extended data packet. For example, an AuxPtr 1 in the extended advertising packet A, an AuxPtr 2 in the extended advertising packet B, and an AuxPtr 3 in the extended advertising packet C each indicate a location at which the scanner receives the extended data packet. In this way, the scanner may receive the extended data packet based on the AuxPtr.

It may be understood that the advertiser may send the extended advertising packet within a plurality of advertising intervals (FIG. 1 shows only one advertising interval), to increase the probability that the scanner receives the extended advertising packet from the advertiser. Correspondingly, the scan window needs to cover at least one of the advertising intervals, so that the scanner can receive the extended advertising packet from the advertiser.

Further, as shown in FIG. 2, the advertiser sends an extended data packet on a data channel D. Correspondingly, the scanner receives the extended data packet from the advertiser based on a location indicated by an AuxPtr in the extended advertising packet. The data channel D may be any one of the CH0 to the CH36 in Table 1.

After the scanner receives the extended data packet from the advertiser based on the location indicated by the AuxPtr in the extended advertising packet, as shown in FIG. 2, the scanner sends an access request message (conn_req) to the advertiser based on information in the extended data packet. Correspondingly, the advertiser receives the access request message from the scanner. Then, the advertiser sends an access response message (conn_rsp) to the scanner based on the access request message. Correspondingly, the scanner receives the access response message from the advertiser. The access response message indicates that the scanner succeeds in access or fails in access. If the scanner succeeds in access, the scanner becomes a G node, and the advertiser becomes a T node.

It should be noted that, in this embodiment of this application, the "access request message" may also be referred to as a "connection request message", and the "access response message" may also be referred to as an "access reply message" or a "connection reply message". This is collectively described herein, and details are not described below again.

It should be noted that, in this embodiment of this application, the "extended advertising packet" may also be referred to as an "extended advertising packet", and the "extended data packet" may also be referred to as an "extended data packet". This is uniformly described herein, and details are not described below again.

### 3. Air interface resource

The air interface resources include a time domain resource and a frequency domain resource. After becoming a G node, a scanner needs to allocate a specific air interface resource to an advertiser (a T node), so that the scanner exchanges data with the advertiser. To be specific, after the scanner accesses the advertiser, a part of an air interface resource of the scanner is occupied, and as a quantity of accessed advertisers increases, the air interface resource of the scanner is in a high-proportion state. In addition, after establishing a connection to the advertiser, the scanner exchanges service data. If interaction of the service data occupies a large quantity of air interface resources, the air interface resource of the scanner is also in the high-proportion state. However, the air interface resource of the scanner is in the high-proportion state, and consequently, the advertising access solution shown in FIG. 1 and FIG. 2 has the following problems.
1. A probability that the scanner accesses the advertiser is low. As shown in FIG. 1, when the air interface resource of the scanner is in a high-duty-cycle state, a time resource (a window duration) allocated by the scanner to the scan window is limited, and may not cover one advertising interval. As a result, the probability that the scanner receives the extended advertising packet from the advertiser is reduced, and the scanner may need to open the scan window for a plurality of times to receive the extended advertising packet. Consequently, the scanner cannot access the advertiser in a timely manner, and therefore user experience is affected.
2. A quantity of advertisers accessed by the scanner is limited. The air interface resource of the scanner is limited. When the air interface resource of the scanner is in the high-duty-cycle state, the scanner may have no idle air interface resource to be allocated to the advertiser. As a result, the scanner cannot access the advertiser.

In view of this, embodiments of this application provide an information sending and receiving method, so that a scanner can still normally complete access when the scanner needs to access a large quantity of advertisers, and a quantity of accessed advertisers can be increased when the air interface resource of the scanner is in the high-proportion state.

The following describes the technical solutions in embodiments of this application with reference to the accompanying drawings in embodiments of this application. In descriptions of this application, "/" indicates an "or" relationship between associated objects unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that terms such as "first" and "second" do not limit a quantity or an execution sequence, and the terms such as "first" and "second" do not indicate a definite difference. In addition, in embodiments of this application, a word, for example, "example" or "for example", is used to represent giving an example, an illustration, or a description. Any embodiment or design scheme described as an "example" or "for example" in embodiments of this application should not be explained as being more preferred or having more advantages than another embodiment or design scheme. Exactly, use of the word, for example, "example" or "for example" is intended to present a relative concept in a specific manner for ease of understanding.

In embodiments of this application, an "indication" may include a direct indication and an indirect indication, or may include an explicit indication and an implicit indication. Information indicated by a piece of information (for example, the following information indicating a role expected by a first device and/or a role expected a second device) is referred to as to-be-indicated information. In a specific implementation process, the to-be-indicated information is indicated in a plurality of manners, for example, but not limited to, a manner of directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent.

It should be understood that, in the following descriptions, a "G node" may also be referred to as a "G role", and a "T node" may also be referred to as a "T role". In other words, the "G node" and the "G role" may be replaced with each other, and the "T node" and the "T role" may be replaced with each other. This is collectively described herein, and details are not described below again.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

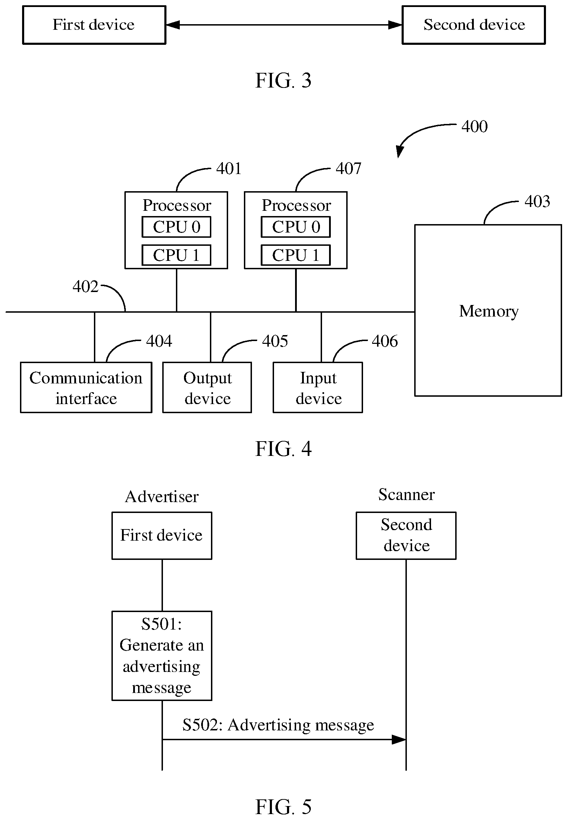

FIG. 3 is a schematic diagram of an architecture of a communication system according to an embodiment of this application. The communication system includes a first device and a second device. In this embodiment of this application, the communication system may include a plurality of first devices and a plurality of second devices. The communication system may be used in scenarios such as vehicle-mounted battery management, an internet of things (internet of things, IoT), and industrial control.

In a possible implementation, the first device generates an advertising message, and sends the advertising message to the second device. The advertising message includes first indication information, and the first indication information indicates a role expected by the first device. The role expected by the first device is a G node or a T node.

A specific implementation of the foregoing solution is described in detail in the following embodiment, and details are not described herein again.

In this embodiment of this application, an advertiser (the first device) sends, to a scanner (the second device) by using the first indication information in the advertising message, the role expected by the advertiser, and therefore can notify the scanner of the role expected by the advertiser when the scanner accesses the advertiser through advertising. Further, the advertiser can be allowed to become the G node, and the scanner can be allowed to become the T node. In this way, after becoming the T node, the scanner does not need to use the air interface resource of the scanner to allocate a corresponding air interface resource to the advertiser. This can alleviate a case that the air interface resource of the scanner is in a high-proportion state because the scanner accesses a large quantity of advertisers, so that the scanner can still normally complete access after accessing the large quantity of advertisers. In addition, when the air interface resource of the scanner is in the high-proportion state, the scanner can further access more advertisers.

Optionally, the first device and the second device in this embodiment of this application each may be an electronic device that has a data receiving and sending processing capability, and may include a terminal device, or may be a chip included in a terminal device. For example, the first device or the second device may be a cockpit domain (cockpit domain) device, or a module in a cockpit domain device, for example, one or more of modules such as a cockpit domain controller (cockpit domain controller, CDC), a camera, a screen, a microphone, a speaker, an electronic key, and a keyless entry or start controller. In a specific embodiment, the first device and the second device each may alternatively be a data forwarding device, for example, a network device, a router, a repeater, a bridge, or a switch.

Optionally, a communication technology in this application may be a communication technology between the terminal devices, or may be a communication technology between the network device and the terminal device, or may be a communication technology between the network devices. Identities of two communication parties are not specifically limited provided that a corresponding communication technology and function can be supported.

Optionally, the terminal device in this embodiment of this application may be various types of user equipment (user equipment, UE), a mobile phone (mobile phone), a tablet computer (pad), a desktop computer, a headset, a speaker, or the like, may further include a machine intelligent device, for example, a self-driving (self-driving) device, a transportation safety (transportation safety) device, a virtual reality (virtual reality, VR) terminal device, an augmented reality (augmented reality, AR) terminal device, a machine type communication (machine type communication, MTC) device, an industrial control (industrial control) device, and a remote medical (remote medical) device, a smart grid (smart grid) device, a smart city (smart city) device, and a smart home device, and may further include a wearable device (for example, a smartwatch, a smart band, or a pedometer), and the like.

Optionally, the network device in this embodiment of this application includes but is not limited to an evolved NodeB (evolved NodeB, eNB), a radio network controller (Radio Network Controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission and reception point (transmission and reception point, TRP), and the like, or may be a gNB or a transmission point (a TRP or a TP) in a 5G system, for example, an NR system, one or a group (including a plurality of antenna panels) of antenna panels of a base station in a 5G system, or may be a network node, for example, a baseband unit (BBU) or a distributed unit (distributed unit, DU), that forms a gNB or a transmission point.

It should be noted that, in this embodiment of this application, the first device is the advertiser, but the first device may have a scanning function of the scanner; and the second device is the scanner, but the second device may have an advertising function of the advertiser. This is not specifically limited in embodiments of this application.

Optionally, a related function of the first device or the second device in this embodiment of this application may be implemented by one device, or may be jointly implemented by a plurality of devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

For example, the related function of the first device or the second device in this embodiment of this application may be implemented by a communication apparatus 400 in FIG. 4.

FIG. 4 is a schematic diagram of a structure of the communication apparatus 400 according to an embodiment of this application. The communication apparatus 400 may be the first device or the second device, or may be a chip or a component used in the first device or the second device.

As shown in FIG. 4, the communication apparatus 400 includes a processor 401, a communication line 402, and at least one communication interface (in FIG. 4, only an example in which a communication interface 404 and one processor 401 are included is used for description), and optionally, may further include a memory 403.

The processor 401 may be a CPU, a microprocessor, an application-specific integrated circuit (application-specific integrated circuit, ASIC), or one or more integrated circuits configured to control program execution in the solutions of this application, for example, one or more microprocessors (digital signal processors, DSPs), or one or more field programmable gate arrays (field programmable gate arrays, FPGAs).

The communication line 402 may include a path for connecting different components.

The communication interface 404 may be a transceiver module, and is configured to communicate with another device or a communication network, for example, Ethernet, a RAN, or a WLAN. For example, the transceiver module may be an apparatus like a transceiver or a transceiver machine. Optionally, the communication interface 404 may alternatively be a transceiver circuit located in the processor 401, and is configured to implement signal input and signal output of the processor.

The memory 403 may be an apparatus having a storage function. For example, the memory 403 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a Blu-ray disc, and the like), a magnetic disk storage medium or another magnetic storage device, or any other medium that can be accessed by a computer and that can be configured to carry or store expected program code in a form of an instruction or a data structure, but is not limited thereto. The memory may exist independently, and is connected to the processor through the communication line 402. The memory may alternatively be integrated with the processor.

The memory 403 is configured to store computer-executable instructions for performing the solutions of this application, and the processor 401 controls execution. The processor 401 is configured to execute the computer-executable instructions stored in the memory 403, to implement the information sending and receiving method provided in embodiments of this application.

Alternatively, in this embodiment of this application, the processor 401 may perform a processing-related function in the information sending and receiving methods provided in the following embodiment of this application, and the communication interface 404 is responsible for communicating with another device or a communication network. This is not specifically limited in embodiments of this application.

The computer-executable instructions in this embodiment of this application may also be referred to as application program code. This is not specifically limited in embodiments of this application.

During specific implementation, in an embodiment, the processor 401 may include one or more CPUs, for example, a CPU 0 and a CPU 1 in FIG. 4.

During specific implementation, in an embodiment, the communication apparatus 400 may include a plurality of processors, for example, the processor 401 and a processor 407 in FIG. 4. Each of these processors may be a single-core (single-CPU) processor, or may be a multi-core (multi-CPU) processor. The processor herein may be one or more devices, a circuit, and/or a processing core configured to process data (for example, a computer program instruction).

During specific implementation, in an embodiment, the communication apparatus 400 may further include an output device 405 and an input device 406. The output device 405 communicates with the processor 401, and may display information in a plurality of manners.

The communication apparatus 400 may be a general-purpose apparatus or a dedicated apparatus. For example, the communication apparatus 400 may be a Bluetooth headset, a desktop computer, a portable computer, a network server, a palmtop computer (personal digital assistant, PDA), a mobile phone, a tablet computer, a wireless terminal apparatus, a vehicle-mounted terminal apparatus, an embedded device, or a device having a structure similar to that in FIG. 4. A type of the communication apparatus 400 is not limited in embodiments of this application.

With reference to FIG. 1 to FIG. 4, the following specifically describes the information sending and receiving method provided in embodiments of this application.

It should be noted that, in the following embodiment of this application, names of messages or names of parameters in messages between devices are merely examples, and the messages or the parameters may have other names during specific implementation. This is not specifically limited in embodiments of this application.

FIG. 5 shows an information sending and receiving method according to an embodiment of this application. The information sending and receiving method includes the following steps.

S501: A first device generates an advertising message. The advertising message includes first indication information, and the first indication information indicates a role expected by the first device. The role expected by the first device is a G node or a T node.

Optionally, in a possible implementation, the first indication information may be a GT flag flag. For example, the GT flag flag may indicate, by using a 1-bit symbol "0", that the role expected by the first device is the T node, or indicate, by using a 1-bit symbol "1", that the role expected by the first device is the G node. Alternatively, the GT flag flag may indicate, by using a 1-bit symbol "1", that the role expected by the first device is the T node, or indicate, by using a 1-bit symbol "0", that the role expected by the first device is the G node. This is not specifically limited in embodiments of this application.

Alternatively, optionally, in another possible implementation, the first indication information may be information indicating that the first device requests to obtain and/or allocate an air interface resource. For example, if the first indication information is information indicating that the first device requests to obtain an air interface resource, the first indication information may indicate that the role expected by the first device is the T node; or if the first indication information is empty, the first indication information may indicate that the role expected by the first device is the G node. Alternatively, if the first indication information is information indicating that the first device requests to allocate an air interface resource to an accessed device, the first indication information may indicate that the role expected by the first device is the G node; or if the first indication information is empty, the first indication information may indicate that the role expected by the first device is the T node.

Alternatively, optionally, in still another possible implementation, the first indication information may be information indicating capability information of the first device. For example, the capability information may be whether the first device supports in allocating a resource to an accessed device. If the capability information is that the first device supports in allocating the resource to the accessed device, the first indication information indicates that the role expected by the first device is the G node. Alternatively, if the capability information is that the first device does not support in allocating the resource to the accessed device, the first indication information indicates that the role expected by the first device is the T node.

Alternatively, optionally, in still another possible implementation, the first indication information may be information indicating that the first device or the second device configures a system management frame. For example, if the first indication information is information indicating that the first device configures a system management frame, the first indication information may indicate that the role expected by the first device is the G node. Alternatively, if the first indication information is information indicating that the second device configures a system management frame, the first indication information may indicate that the role expected by the first device is the T node. The system management frame is used by the G node to manage the T node.

Alternatively, optionally, in still another possible implementation, the first indication information may be information indicating that the second device sends first connection information, or information indicating that the first device sends second connection information. The first connection information is connection information that is provided by the second device and that is needed in a process in which the second device accesses the first device. The second connection information is connection information that is provided by the first device and that is needed in a process in which the second device accesses the first device. If the first indication information is information indicating that the second device sends the first connection information, the first indication information may indicate that the role expected by the first device is the T node. Alternatively, if the first indication information is information indicating that the first device sends the second connection information, the first indication information may indicate that the role expected by the first device is the G node.

For example, in this embodiment of this application, the connection information needed for the second device to access the first device may include but is not limited to a local clock, a time offset, an access address, a frequency hopping map, a cyclic redundancy check (cyclic redundancy check, CRC) code initial value, a connected state period, or connected state timeout duration. The time offset may indicate a time resource for communicating data between the first device and the second device. The frequency hopping map may be used to determine a frequency at which the first device establishes a connection to the second device. The CRC code initial value is used for CRC calculation, and CRC may be used to detect whether an error occurs in the data communicated between the first device and the second device. The connected state period is a period within which the first device communicates data with the second device. The connected state timeout duration may indicate whether a connection is re-established between the first device and the second device. For example, if the first device does not receive data from the second device within the connected state timeout duration, it indicates that a connection established between the first device and the second device this time is unstable, and the connection needs to be re-established.

In other words, in this embodiment of this application, the first indication information may be the GT flag flag, to explicitly indicate the role expected by the first device. In addition, the first indication information may be the information indicating that the first device requests to obtain and/or allocate the air interface resource, the information indicating the capability information of the first device, the information indicating that the first device or the second device configures the system management frame, the information indicating that the second device sends the first connection information, the information indicating that the first device sends the second connection information, or the like, to implicitly indicate the role expected by the first device. This is not specifically limited in embodiments of this application.

S502: The first device sends the advertising message to the second device. Correspondingly, the second device receives the advertising message from the first device.

Optionally, in this embodiment of this application, the first device may send the advertising message to the second device on one or more advertising channels within an advertising interval. Correspondingly, the second device may receive the advertising message from the first device in a scan window.

In this embodiment of this application, an advertiser (the first device) sends, to a scanner (the second device) by using the first indication information in the advertising message, the role expected by the advertiser, and therefore can notify the scanner of the role expected by the advertiser when the scanner accesses the advertiser through advertising. Further, the advertiser can be allowed to become the G node, and the scanner can be allowed to become the T node. In this way, after becoming the T node, the scanner does not need to use the air interface resource of the scanner to allocate a corresponding air interface resource to the advertiser. This can alleviate a case that an air interface resource of the second device is in a high-proportion state because the second device accesses a large quantity of first devices, so that the second device can still normally complete access after accessing the large quantity of first devices. In addition, when the air interface resource of the second device is in the high-proportion state, the second device can further access more first devices.

The processor 401 in the communication apparatus 400 shown in FIG. 4 may invoke application program code stored in the memory 403, to indicate the first device to perform actions of the first device in steps S501 and S502. The processor 401 in the communication apparatus 400 shown in FIG. 4 may invoke application program code stored in the memory 403, to indicate the second device to perform actions of the second device in steps S501 and S502. This is not limited in embodiments of this application.

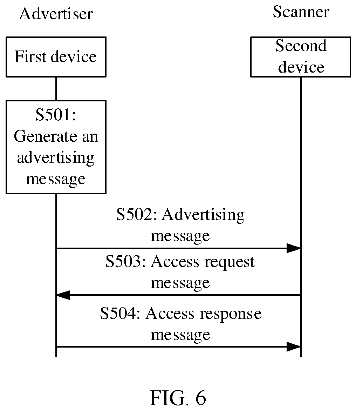

Optionally, as shown in FIG. 6, after step S502, the information sending and receiving method provided in this embodiment of this application may further include the following steps.

S503: When the second device determines, based on the advertising message, to request to access the first device, the second device sends an access request message to the first device. The access request message is used by the second device to request to access the first device. Correspondingly, the first device receives the access request message from the second device.

Alternatively, optionally, in this embodiment of this application, when the second device determines, based on the advertising message, to request to access the first device, the second device sends an access request message to the first device on a first time resource. The access request message is used by the second device to request to access the first device. Correspondingly, the first device receives the access request message from the second device on the first time resource.

Optionally, in this embodiment of this application, the first time resource may be determined by the first device. Correspondingly, the advertising message in step S501 indicates the first time resource. In other words, the second device may determine the first time resource based on the advertising message, so that the second device can send the access request message to the first device on the first time resource.

Optionally, in this embodiment of this application, the advertising message may indicate the first time resource in an explicit manner. For example, the advertising message may include a start moment and an end moment of the first time resource.

Alternatively, optionally, in this embodiment of this application, the first time resource may alternatively be negotiated by the first device and the second device in advance. Alternatively, the first time resource is agreed upon in a protocol. This is not specifically limited in embodiments of this application.

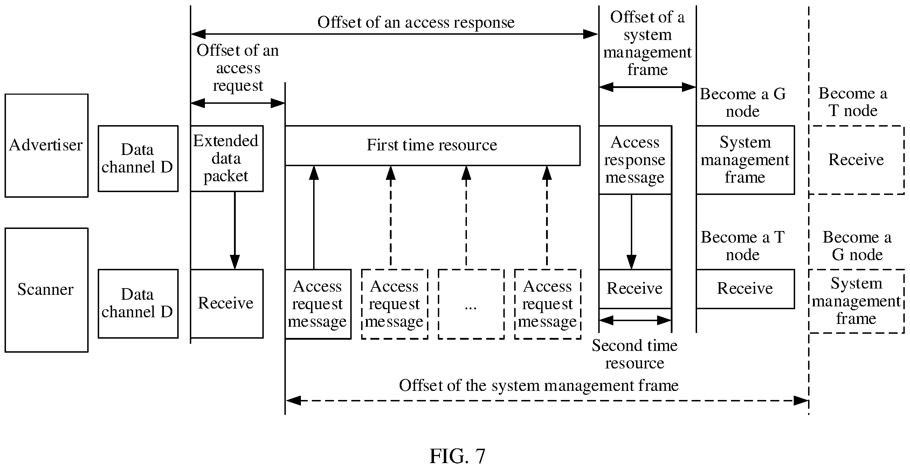

For example, an example in which the advertising message includes an extended advertising packet is used to describe a procedure in which the second device sends the access request message on the first time resource. FIG. 7 is a schematic flowchart of accessing the first device by the second device. A time interval between the start moment of the first time resource and a start moment at which the first device sends an extended data packet is an offset of an access request. The second device may send one or more access request messages on the first time resource. Correspondingly, the first device may receive the access request message from the second device on the first time resource.

S504: The first device sends an access response message to the second device. Correspondingly, the second device receives the access response message from the first device. The access response message indicates that the second device succeeds in access or fails in access.

Alternatively, optionally, in this embodiment of this application, when the first device receives the access request message from the second device on the first time resource, the first device sends the access response message to the second device.

Optionally, the first device may send the access response message on a second time resource. Correspondingly, the second device receives the access response message from the first device on the second time resource.

Optionally, in this embodiment of this application, the second time resource may be determined by the second device. Correspondingly, the access request message may further indicate the second time resource. In other words, the first device may determine the second time resource based on the access request message, so that the first device can send the access response message to the second device on the second time resource.

Optionally, the access request message may indicate the second time resource in the explicit manner. For example, the access request message may include a start moment and an end moment of the second time resource.

Alternatively, optionally, in this embodiment of this application, the second time resource may alternatively be negotiated by the first device and the second device in advance. Alternatively, the second time resource is agreed upon in a protocol. This is not specifically limited in embodiments of this application.

For example, refer to FIG. 7 again. A time interval between a start moment at which the first device sends the access response message and the start moment at which the first device sends the extended data packet is an offset of an access response. The offset of the access response is greater than a sum of the offset of the access request and a time length of the first time resource.

Optionally, in this embodiment of this application, the access request message indicates that the second device agrees to access the first device as a role other than a role expected by the first device. Correspondingly, the access response message indicates that the second device succeeds in access. In other words, the second device may determine that, after the first device establishes the connection to the second device, the first device may become the role expected by the first device.

Alternatively, optionally, the access request message includes second indication information, and the second indication information indicates a role expected by the second device. The role expected by the second device is the G node or the T node. To be specific, in this embodiment of this application, the first device may explicitly notify the second device of the role expected by the first device, and the second device may explicitly notify the first device of the role expected by the second device.

It should be understood that a specific form of the second indication information is similar to that of the first indication information. For example, the second indication information may be a GT flag flag. Alternatively, the second indication information may be information indicating that the second device requests to obtain and/or allocate an air interface resource, information indicating capability information of the second device, the information indicating that the first device or the second device configures the system management frame, the information indicating that the second device sends the first connection information, or the information indicating that the first device sends the second connection information. For related descriptions of the second indication information, refer to the foregoing descriptions of the first indication information. Details are not described herein again.

Optionally, when the role expected by the second device is different from the role expected by the first device, the access response message indicates that the second device succeeds in access as the role expected by the second device. In other words, in this embodiment of this application, when the first device explicitly notifies the second device of the role expected by the first device, and the second device explicitly notifies the first device of the role expected by the second device, if the role expected by the first device does not conflict with the role expected by the second device, the second device may succeed in access as the role expected by the second device.

Optionally, when the role expected by the second device is the same as the role expected by the first device, the access response message indicates that the second device succeeds in access as the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and the first device agrees to become a role other than the role expected by the first device, the second device may succeed in access as the role expected by the second device.

Alternatively, optionally, when the role expected by the second device is the same as the role expected by the first device, the access response message indicates that the second device fails in access as the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and the first device does not agree that the second device becomes the role expected by the second device, the second device fails in access as the role expected by the second device.

The first device may determine, based on an actual application scenario, whether to agree that the second device accesses the first device as the role expected by the second device.

For example, the first device may determine, based on service information, whether to agree that the second device accesses the first device as the role expected by the second device. The service information may be indicated by an application (application). If the application indicates that the first device can only become the T node, when the role expected by the second device is the T node, the first device does not agree that the second device accesses the first device as the role expected by the second device. For example, the application may be an audio playing application, and the first device is an audio playing device. In this case, the first device can only become the T node.

Alternatively, for example, the first device may determine, based on hardware information, whether to agree that the second device accesses the first device as the role expected by the second device. For example, the first device is an input device like a keyboard, a mouse, or a stylus. In this case, the first device can only become the T node. When the role expected by the second device is the T node, the first device does not agree that the second device accesses the first device as the role expected by the second device.

In other words, the first device and the second device may indicate, by using the first indication information and the second indication information, the role expected by the first device and the role expected by the second device, and the first device determines whether the second device can succeed in access as the role expected by the second device.

Optionally, in this embodiment of this application, when the role expected by the second device is the G node, the access request message further includes the first connection information. The first connection information includes one or more of the following provided by the second device: a local clock, a time offset, an access address, a frequency hopping map, a CRC code initial value, a connected state period, or connected state timeout duration.

Optionally, in this embodiment of this application, when the access response message indicates that the second device succeeds in access as a role of the T node, or when the access request message indicates that the second device agrees to access the first device as a role other than the role expected by the first device, and the role expected by the first device is the G node, the access response message further includes the second connection information. The second connection information includes one or more of the following provided by the first device: a local clock, a time offset, an access address, a frequency hopping map, a CRC code initial value, a connected state period, or connected state timeout duration.

For example, refer to FIG. 7 again. When the access response message indicates that the second device succeeds in access, the first device becomes the G node, and the second device becomes the T node, the first device sends the system management frame to the second device. A time interval between the start moment at which the first device sends the system management frame and the start moment at which the first device sends the access response message is an offset of the system management frame. Alternatively, as shown in FIG. 7, when the access response message indicates that the second device succeeds in access, the first device becomes the T node, and the second device becomes the G node, the second device sends the system management frame to the first device. A time interval between a start moment at which the second device sends the system management frame and the start moment at which the first device sends the access response is an offset of the system management frame.

In this embodiment of this application, the second device (the scanner) is allowed to become the T node, and the first device (the advertiser) is allowed to become the G node. Therefore, after becoming the T node, the scanner does not need to use the air interface resource of the scanner to allocate the corresponding air interface resource to the advertiser. This can alleviate a case that the air interface resource of the second device is in the high-proportion state because the second device accesses the large quantity of first devices, so that the second device can still normally complete access after accessing the large quantity of first devices. In addition, when the air interface resource of the second device is in the high-proportion state, the second device can further access more first devices.

Optionally, the advertising message in this embodiment of this application includes the extended advertising packet and the extended data packet. Further, S502 may include the following step.

S502a: The first device sends the extended advertising packet to the second device on the one or more advertising channels within the advertising interval, and sends the extended data packet to the second device on a data channel. Correspondingly, the second device receives the extended advertising packet from the first device on the one or more advertising channels, and receives the extended data packet from the first device on the data channel. The extended advertising packet and/or the extended data packet may include the first indication information.

It may be understood that S502a is similar to the solution shown in FIG. 2 in the preamble portion of the specific embodiments. For example, the first device may sequentially send the extended advertising packet on the advertising channel A, the advertising channel B, and the advertising channel C, and send the extended data packet on the data channel D. For related descriptions of S502a, refer to the solution shown in FIG. 2. Details are not described herein again.

Optionally, in this embodiment of this application, an AuxPtr may indicate a channel on or a frequency at which the extended data packet is located, a time domain resource for receiving the extended data packet, physical layer information, and the like. The time domain resource for receiving the extended data packet may include clock precision, a clock unit, a time offset for receiving the extended data packet, or the like. The physical layer information may include a channel bandwidth used by the extended data packet, a channel coding type, or the like.

It should be understood that, in this embodiment of this application, the channel bandwidth may be understood as a symbol (symbol) rate, that is, the channel bandwidth may be understood as a quantity of symbols transmitted within a unit time. For example, that the channel bandwidth includes 1 MHz, 2 MHz, or 4 MHz may be understood as that the symbol rate includes 1M symbol/s (a quantity of symbols transmitted per second is 1M), 2M symbol/s, or 4M symbol/s.

Optionally, in this embodiment of this application, the extended data packet may include identification information indicating a device that can request to access the first device and/or the capability information of the first device. The identification information of the device that can request to access the first device identifies an identity of a device that can request to establish a connection to the first device. For example, the identification information may include a media access control (media access control address, MAC) address of the device that can request to access the first device.

Optionally, the capability information of the first device may indicate one or more of the following: a modulation scheme supported by the first device, a channel bandwidth supported by the first device, whether the first device supports channel coding, or a type of channel coding supported by the first device.

For example, the modulation scheme supported by the first device may include a Gaussian frequency-shift keying (Gaussian frequency-shift keying, GFSK) modulation scheme and/or a phase-shift keying (phase-shift keying, PSK) modulation scheme.

For example, the channel bandwidth supported by the first device may include a total channel bandwidth supported by the first device and/or a channel bandwidth of each frequency hopping channel in a frequency hopping manner.

For example, the type of channel coding supported by the first device includes a polar code coding scheme, a Reed-Solomon code (Reed-Solomon code, RS) coding scheme, a binary coded Hollerith (binary coded Hollerith, BCH) coding scheme, or the like. This is not specifically limited in embodiments of this application.

The processor 401 in the communication apparatus 400 shown in FIG. 4 may invoke application program code stored in the memory 403, to indicate the first device to perform actions of the first device in steps S501 to S504. The processor 401 in the communication apparatus 400 shown in FIG. 4 may invoke application program code stored in the memory 403, to indicate the second device to perform actions of the second device in steps S501 and S504. This is not limited in embodiments of this application.

Optionally, in the information sending and receiving method provided in this embodiment of this application, after the second device receives the advertising message from the first device (step S502), the information sending and receiving method provided in this embodiment of this application further includes: When the second device determines, based on the advertising message, that the second device cannot access the first device, the second device gives up sending an access request message to the first device. Further, when the first device does not receive the access request message from the second device on a first time resource, the first device determines that the connection between the first device and the second device fails, and also gives up sending the access response message to the second device. In other words, if the second device cannot accept the role expected by the first device, the second device may notify the first device, in a manner of not sending the access request, that the connection between the second device and the first device fails. In this way, subsequent overheads of the access request message and the access response message can be reduced, and energy of the first device and the second device can also be saved.

Optionally, in this embodiment of this application, the first indication information further indicates whether the role expected by the first device is negotiable. The first indication information can be used to determine whether the role expected by the first device is negotiable. Therefore, the second device can determine, based on the first indication information, whether to send the access request message to the first device. For example, when the role expected by the first device is the same as a role expected by the second device, and the first indication information indicates that the role expected by the first device is non-negotiable, the second device can determine not to send the access request message to the first device. In this way, signaling overheads and power consumption can be reduced.

Optionally, in this embodiment of this application, when the first indication information further indicates whether the role expected by the first device is negotiable, the first indication information may be the GT flag flag. For example, the GT flag flag may be indicated by two bits. One bit indicates the role expected by the first device, and the other bit indicates whether the role expected by the first device is negotiable. For example, a high bit indicates the role expected by the first device, and a low bit indicates whether the role expected by the first device is negotiable. Alternatively, a low bit indicates the role expected by the first device, and a high bit indicates whether the role expected by the first device is negotiable. For example, a 1-bit symbol "0" indicates that the role expected by the first device is the T node, or a 1-bit symbol "1" indicates that the role expected by the first device is the G node. Alternatively, a 1-bit symbol "1" indicates that the role expected by the first device is the T node, or a 1-bit symbol "0" indicates that the role expected by the first device is the G node. For example, a 1-bit symbol "0" indicates that the role expected by the first device is negotiable, or a 1-bit symbol "1" indicates that the role expected by the first device is non-negotiable. Alternatively, a 1-bit symbol "1" indicates that the role expected by the first device is negotiable, or a 1-bit symbol "0" indicates that the role expected by the first device is non-negotiable. This is not specifically limited in embodiments of this application.

Alternatively, optionally, the first indication information may be a combination of a GT flag flag and information indicating that the first device requests to obtain and/or allocate an air interface resource. Alternatively, the first indication information may be a combination of a GT flag flag and capability information indicating the first device. Alternatively, the first indication information may be a combination of a GT flag flag and information indicating that the first device or the second device configures a system management frame. Alternatively, the first indication information may be a combination of a GT flag flag and information indicating that the second device sends first connection information. Alternatively, the first indication information may be a combination of a GT flag flag and information indicating that the first device sends second connection information. The GT flag flag may indicate whether the role expected by the first device is negotiable. For example, the GT flag flag may indicate, by using a 1-bit symbol "0", that the role expected by the first device is negotiable, or indicate, by using "1", that the role expected by the first device is non-negotiable. Alternatively, a symbol "1" indicates that the role expected by the first device is negotiable, or a symbol "0" indicates that the role expected by the first device is non-negotiable. This is not specifically limited in embodiments of this application.

Alternatively, optionally, the first indication information may be a combination of information indicating that the first device requests to obtain and allocate an air interface resource and the capability information of the first device. Alternatively, the first indication information may be a combination of information indicating that the first device requests to obtain and allocate an air interface resource and information indicating that the first device or the second device configures a system management frame. Alternatively, the first indication information may be a combination of information indicating that the first device requests to obtain and allocate an air interface resource and information indicating that the second device sends first connection information. Alternatively, the first indication information may be a combination of information indicating that the first device requests to obtain and allocate an air interface resource and information indicating that the first device sends the second connection information. The information indicating that the first device requests to obtain and allocate the air interface resource may indicate that a role expected by the first device is negotiable. The first device can not only obtain the air interface resource, but also allocate the air interface resource. Therefore, it may be indicated that the role expected by the first device is negotiable.

Optionally, in this embodiment of this application, the access request message includes third indication information, and the third indication information indicates a role expected by the second device and whether the role expected by the second device is negotiable. To be specific, in this embodiment of this application, the first device may explicitly notify the second device of the role expected by the first device and whether the role is negotiable, and the second device may explicitly notify the first device of the role expected by the second device and whether the role is negotiable.

It should be understood that a principle of the third indication information is similar to that of the first indication information. For example, the third indication information may be a GT flag flag, indicating, by using a 2-bit symbol, the role expected by the second device and whether the role expected by the second device is negotiable. For related descriptions of the third indication information, refer to the related descriptions of the first indication information. Details are not described herein again.

Optionally, when the role expected by the second device is different from the role expected by the first device, the access response message indicates that the second device succeeds in access as the role expected by the second device. In other words, in this embodiment of this application, when the first device explicitly notifies the second device of the role expected by the first device, and the second device explicitly notifies the first device of the role expected by the second device, if the role expected by the first device does not conflict with the role expected by the second device, the second device may succeed in access as the role expected by the second device.

Optionally, when the role expected by the second device is the same as the role expected by the first device, the role expected by the first device is non-negotiable, and the role expected by the second device is non-negotiable, the access response message indicates that the second device fails in access as the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and the role expected by the first device and the role expected by the second device are non-negotiable, the second device fails in access as the role expected by the second device.

Optionally, when the role expected by the second device is the same as the role expected by the first device, the role expected by the first device is non-negotiable, and the role expected by the second device is negotiable, the access response message indicates that the second device succeeds in access as a role other than the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, the role expected by the first device is non-negotiable, and the role expected by the second device is negotiable, the second device succeeds in access as the role other than the role expected by the second device.

Alternatively, optionally, when the role expected by the second device is the same as the role expected by the first device, the role expected by the first device is non-negotiable, and the role expected by the second device is negotiable, the access response message indicates that the second device fails in access as the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, the role expected by the first device is non-negotiable, and the role expected by the second device is negotiable, the second device fails in access as the role expected by the second device.

Optionally, when the role expected by the second device is the same as the role expected by the first device, the role expected by the first device is negotiable, and the role expected by the second device is non-negotiable, the access response message indicates that the second device succeeds in access as the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and the role expected by the first device is negotiable, the second device may succeed in access as the role expected by the second device. In this embodiment of this application, a scanner and an advertiser are allowed to negotiate a G role and a T role. Therefore, the G role and the T role are set more flexibly in an access process, and an actual service requirement can be met.

Optionally, when the role expected by the second device is the same as the role expected by the first device, the role expected by the first device is negotiable, and the role expected by the second device is negotiable, the access response message indicates that the second device succeeds in access as the role expected by the second device, or the access response message indicates that the second device succeeds in access as a role other than the role expected by the second device. In other words, in this embodiment of this application, when the first device explicitly notifies the second device of the role expected by the first device, and the second device explicitly notifies the first device of the role expected by the second device, if the role expected by the first device conflicts with the role expected by the second device, and both the role expected by the first device and the role expected by the second device are negotiable, the second device may succeed in access as the role expected by the second device, or the second device may succeed in access as the role other than the role expected by the second device. This is not specifically limited in embodiments of this application.

In this embodiment of this application, the second device (a scanner) is allowed to become the T node, and the first device (an advertiser) is allowed to become the G node. Therefore, after becoming the T node, the scanner does not need to use the air interface resource of the scanner to allocate a corresponding air interface resource to the advertiser. This can alleviate a case that air interface resource of the second device is in a high-proportion state because the second device accesses a large quantity of first devices, so that the second device can still normally complete access after accessing the large quantity of first devices. In addition, when the air interface resource of the second device is in the high-proportion state, the second device can further access more first devices. In addition, in this embodiment of this application, the second device is allowed to determine whether to agree that the first device becomes the role expected by the first device. Therefore, when the second device does not agree, the second device may not send the access request message to the first device. This can reduce energy consumption and reduce network resource overheads.

Optionally, in the information sending and receiving method provided in this embodiment of this application, after the first device receives the access request message from the second device (step S503), the information sending and receiving method provided in this embodiment of this application further includes: When the first device determines, based on the access request message, that the second device cannot access the first device, the first device gives up sending an access response message to the second device. Further, when the second device does not receive the access response message from the first device on a second time resource, the second device determines that a connection between the first device and the second device fails. In other words, if the first device cannot accept the role expected by the second device, the first device may notify, in a manner of not sending an access response, the second device that the connection between the first device and the second device fails. In this way, network resources and energy overheads for sending the access response message can be reduced.

Both the first device and the second device in the foregoing embodiment may use an architecture of the communication apparatus 400 shown in FIG. 4. Therefore, the processor 401 in the communication apparatus 400 shown in FIG. 4 may invoke application program code stored in the memory 403, to indicate the first device to perform actions of the first device in the foregoing embodiment. The processor 401 in the communication apparatus 400 shown in FIG. 4 may invoke application program code stored in the memory 403, to indicate the second device to perform actions of the second device in the foregoing embodiments. This is not limited in embodiments of this application.

It may be understood that, in the foregoing embodiments, the method and/or the step implemented by the first device may alternatively be implemented by a component (for example, a chip or a circuit) that may be used for the first device, and the method and/or the step implemented by the second device may alternatively be implemented by a component (for example, a chip or a circuit) that may be used for the second device.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the first device in the foregoing method embodiment, an apparatus including the first device, or a component that can be used for the first device. Alternatively, the communication apparatus may be the second device in the foregoing method embodiment, an apparatus including the second device, or a component that can be used for the second device. It may be understood that, to implement the foregoing functions, the communication apparatus includes a hardware structure and/or a software module for performing each corresponding function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that division into the modules in this embodiment of this application is an example, and is merely logical function division. During actual implementation, there may be another division manner.

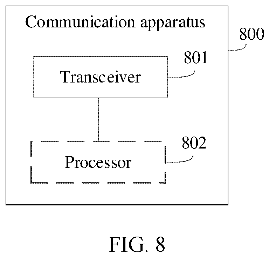

FIG. 8 is a schematic diagram of a structure of a communication apparatus 800. The communication apparatus 800 includes a transceiver 801. The transceiver 801 may also be referred to as a transceiver unit, configured to implement a transceiver function, for example, may be a transceiver circuit, a transceiver machine, or a communication interface. Optionally, the communication apparatus 800 may include a processor 802.

For example, the communication apparatus 800 is the first device in the foregoing method embodiment. In this case, the processor 802 is configured to generate an advertising message, and the transceiver 801 is configured to send the advertising message to a second device. The advertising message includes first indication information, and the first indication information indicates a role expected by the first device. The role expected by the first device is a G node or a T node.

In a possible implementation, the transceiver 801 is further configured to receive an access request message from the second device. The transceiver 801 is further configured to send an access response message to the second device. The access request message is used by the second device to request to access the first device. The access response message indicates that the second device succeeds in access or fails in access.

In a possible implementation, the access request message includes second indication information, and the second indication information indicates a role expected by the second device. The role expected by the second device is the G node or the T node.

In a possible implementation, when the role expected by the second device is different from the role expected by the first device, the access response message indicates that the second device succeeds in access as the role expected by the second device.

In a possible implementation, when the role expected by the second device is the same as the role expected by the first device, the access response message indicates that the second device succeeds in access as the role expected by the second device.

In a possible implementation, when the role expected by the second device is the same as the role expected by the first device, the access response message indicates that the second device fails in access as the role expected by the second device.

In a possible implementation, the first indication information further indicates whether the role expected by the first device is negotiable.

In a possible implementation, the access request message includes third indication information. The third indication information indicates a role expected by the second device and whether the role expected by the second device is negotiable. The role expected by the second device is the G node or the T node.

In a possible implementation, when the role expected by the second device is different from the role expected by the first device, the access response message indicates that the second device succeeds in access as the role expected by the second device.

In a possible implementation, when the role expected by the second device is the same as the role expected by the first device, the role expected by the first device is non-negotiable, and the role expected by the second device is non-negotiable, the access response message indicates that the second device fails in access as the role expected by the second device.

In a possible implementation, when the role expected by the second device is the same as the role expected by the first device, the role expected by the first device is non-negotiable, and the role expected by the second device is negotiable, the access response message indicates that the second device succeeds in access as a role other than the role expected by the second device.

In a possible implementation, when the role expected by the second device is the same as the role expected by the first device, the role expected by the first device is negotiable, and the role expected by the second device is non-negotiable, the access response message indicates that the second device succeeds in access as the role expected by the second device.

In a possible implementation, when the role expected by the second device is the same as the role expected by the first device, the role expected by the first device is negotiable, and the role expected by the second device is negotiable, the access response message indicates that the second device succeeds in access as the role expected by the second device, or the access response message indicates that the second device succeeds in access as a role other than the role expected by the second device.

In a possible implementation, the processor 802 is further configured to: when the transceiver 801 does not receive the access request message from the second device on a first time resource, determine that a connection between the first device and the second device fails.

In a possible implementation, when the role expected by the second device is the G node, the access request message further includes first connection information. The first connection information includes one or more of the following provided by the second device: a local clock, a time offset, an access address, a frequency hopping map, a CRC code initial value, a connected state period, or connected state timeout duration.

In a possible implementation, when the access response message indicates that the second device succeeds in access as the role of the T node, the access response message further includes second connection information. The second connection information includes one or more of the following provided by the first device: a local clock, a time offset, an access address, a frequency hopping map, a CRC code initial value, a connected state period, or connected state timeout duration.

For example, the communication apparatus 800 is the second device in the foregoing method embodiment. In this case, the transceiver 801 is configured to receive an advertising message from a first device. The advertising message includes first indication information, and the first indication information indicates a role expected by the first device. The role expected by the first device is a G node or a T node.

In a possible implementation, the transceiver 801 is further configured to send an access request message to the first device when the processor 802 determines, based on the advertising message, to request to access the first device. The transceiver 801 is further configured to receive an access response message from the first device. The access request message is used by the second device to request to access the first device. The access response message indicates that the second device succeeds in access or fails in access.

In a possible implementation, the access request message includes second indication information, and the second indication information indicates a role expected by the second device. The role expected by the second device is the G node or the T node.

In a possible implementation, when the role expected by the second device is different from the role expected by the first device, the access response message indicates that the second device succeeds in access as the role expected by the second device.

In a possible implementation, when the role expected by the second device is the same as the role expected by the first device, the access response message indicates that the second device succeeds in access as the role expected by the second device.

In a possible implementation, when the role expected by the second device is the same as the role expected by the first device, the access response message indicates that the second device fails in access as the role expected by the second device.

In a possible implementation, the first indication information further indicates whether the role expected by the first device is negotiable.

In a possible implementation, the access request message includes third indication information. The third indication information indicates a role expected by the second device and whether the role expected by the second device is negotiable. The role expected by the second device is the G node or the T node.

In a possible implementation, when the role expected by the second device is different from the role expected by the first device, the access response message indicates that the second device succeeds in access as the role expected by the second device.

In a possible implementation, when the role expected by the second device is the same as the role expected by the first device, the role expected by the first device is non-negotiable, and the role expected by the second device is non-negotiable, the access response message indicates that the second device fails in access as the role expected by the second device.

In a possible implementation, when the role expected by the second device is the same as the role expected by the first device, the role expected by the first device is non-negotiable, and the role expected by the second device is negotiable, the access response message indicates that the second device succeeds in access as a role other than the role expected by the second device.

In a possible implementation, when the role expected by the second device is the same as the role expected by the first device, the role expected by the first device is negotiable, and the role expected by the second device is non-negotiable, the access response message indicates that the second device succeeds in access as the role expected by the second device.

In a possible implementation, when the role expected by the second device is the same as the role expected by the first device, the role expected by the first device is negotiable, and the role expected by the second device is negotiable, the access response message indicates that the second device succeeds in access as the role expected by the second device, or the access response message indicates that the second device succeeds in access as a role other than the role expected by the second device.

In a possible implementation, the processor 802 is further configured to: when the transceiver 801 does not receive the access response message from the first device on a second time resource, determine that a connection between the second device and the first device fails.

In a possible implementation, when the role expected by the second device is the G node, the access request message further includes first connection information. The first connection information includes one or more of the following provided by the second device: a local clock, a time offset, an access address, a frequency hopping map, a CRC code initial value, a connected state period, or connected state timeout duration.

In a possible implementation, when the access response message indicates that the second device succeeds in access as the role of the T node, the access response message further includes second connection information. The second connection information includes one or more of the following provided by the first device: a local clock, a time offset, an access address, a frequency hopping map, a CRC code initial value, a connected state period, or connected state timeout duration.

All related content of the steps in the foregoing method embodiment may be cited in function descriptions of the corresponding functional modules. Details are not described herein again.

In this embodiment, the communication apparatus 800 is presented in a form of functional modules obtained through integration. The "module" herein may be a specific ASIC, a circuit, a processor that executes one or more software or firmware programs, a memory, an integrated logic circuit, and/or another component that can provide the foregoing functions.

When the communication apparatus 800 is the first device or the second device in the foregoing method embodiment, in a simple embodiment, a person skilled in the art may figure out that the communication apparatus 800 may be in a form of the communication apparatus 400 shown in FIG. 4.

For example, the processor 401 or the processor 407 in the communication apparatus 400 shown in FIG. 4 may invoke the computer-executable instructions stored in the memory 403, to enable the communication apparatus 400 to perform the information sending and receiving methods in the foregoing method embodiment. Specifically, a function/implementation process of the processor 802 in FIG. 8 may be implemented by the processor 401 or 407 in the communication apparatus 400 shown in FIG. 4 by invoking the computer-executable instructions stored in the memory 403. A function/implementation process of the transceiver 801 in FIG. 8 may be implemented by using a communication module connected through the communication interface 404 in FIG. 4.

The communication apparatus 800 provided in this embodiment may perform the foregoing information sending and receiving method. Therefore, for technical effects that can be achieved by the communication apparatus 800, refer to the foregoing method embodiment. Details are not described herein again.

It should be noted that one or more of the foregoing modules or units may be implemented by software, hardware, or a combination thereof. When any one of the foregoing modules or units is implemented by software, the software exists in a form of a computer program instruction, and is stored in a memory. A processor may be configured to execute the program instruction and implement the foregoing method procedure. The processor may be built into a SoC (system-on-a-chip) or an ASIC, or may be an independent semiconductor chip. In addition to a core for executing software instructions to perform an operation or processing, the processor may further include a necessary hardware accelerator, for example, a field programmable gate array (field programmable gate array, FPGA), a PLD (programmable logic device), or a logic circuit implementing a dedicated logical operation.

When the foregoing modules or units are implemented by hardware, the hardware may be any one or any combination of a CPU, a microprocessor, a digital signal processing (digital signal processor, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete component. The hardware may run necessary software or does not depend on software to perform the foregoing method procedure.

Optionally, an embodiment of this application further provides a chip system. The chip system includes at least one processor and an interface. The at least one processor is coupled to a memory through the interface. When the at least one processor executes a computer program or instructions stored in the memory, the method according to any one of the foregoing method embodiments is performed. In a possible implementation, the communication apparatus further includes a memory. Optionally, the chip system may include a chip, or may include a chip and another discrete component. This is not specifically limited in embodiments of this application.

All or some of the foregoing embodiments may be implemented by using software, hardware, firmware, or any combination thereof. When a software program is used to implement embodiments, embodiments may be all or partially implemented in a form of a computer program product. The computer program product includes one or more computer instructions. When the computer program instruction is loaded and executed on a computer, the procedure or functions according to embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, this specification and the accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims in this application and their equivalent technologies.

## Claims

1. An information sending method, wherein the method comprises:
generating, by a first device, an advertising message, wherein the advertising message comprises first indication information, the first indication information indicates a role expected by the first device, and the role expected by the first device is a grant node or a terminal node; and
sending, by the first device, the advertising message to a second device.

2. The method according to claim 1, wherein the method further comprises:
when the first device does not receive an access request message from the second device on a first time resource, determining, by the first device, that a connection between the first device and the second device fails, wherein the access request message is used by the second device to request to access the first device.

3. The method according to claim 1, wherein the method further comprises:
receiving, by the first device, an access request message from the second device, wherein the access request message is used by the second device to request to access the first device; and
sending, by the first device, an access response message to the second device, wherein the access response message indicates that the second device succeeds in access or fails in access.

4. The method according to claim 2 or 3, wherein the access request message comprises second indication information, the second indication information indicates a role expected by the second device, and the role expected by the second device is the grant node or the terminal node.

5. The method according to claim 4, wherein when the role expected by the second device is different from the role expected by the first device, the access response message indicates that the second device succeeds in access as the role expected by the second device.

6. The method according to claim 4, wherein when the role expected by the second device is the same as the role expected by the first device, the access response message indicates that the second device succeeds in access as the role expected by the second device.

7. The method according to claim 4, wherein when the role expected by the second device is the same as the role expected by the first device, the access response message indicates that the second device fails in access as the role expected by the second device.

8. The method according to any one of claims 1 to 3, wherein the first indication information further indicates whether the role expected by the first device is negotiable.

9. The method according to claim 8, wherein the access request message comprises third indication information, the third indication information indicates a role expected by the second device and whether the role expected by the second device is negotiable, and the role expected by the second device is the grant node or the terminal node.

10. The method according to claim 9, wherein when the role expected by the second device is different from the role expected by the first device, the access response message indicates that the second device succeeds in access as the role expected by the second device.

11. The method according to claim 9, wherein when the role expected by the second device is the same as the role expected by the first device, the role expected by the first device is non-negotiable, and the role expected by the second device is non-negotiable, the access response message indicates that the second device fails in access as the role expected by the second device; or
when the role expected by the second device is the same as the role expected by the first device, the role expected by the first device is non-negotiable, and the role expected by the second device is negotiable, the access response message indicates that the second device succeeds in access as a role other than the role expected by the second device.

12. The method according to claim 9, wherein when the role expected by the second device is the same as the role expected by the first device, the role expected by the first device is negotiable, and the role expected by the second device is non-negotiable, the access response message indicates that the second device succeeds in access as the role expected by the second device; or
when the role expected by the second device is the same as the role expected by the first device, the role expected by the first device is negotiable, and the role expected by the second device is negotiable, the access response message indicates that the second device succeeds in access as the role expected by the second device, or the access response message indicates that the second device succeeds in access as a role other than the role expected by the second device.

13. The method according to any one of claims 2 to 12, wherein when the role expected by the second device is the grant node,
the access request message further comprises first connection information, and the first connection information comprises one or more of the following provided by the second device: a local clock, a time offset, an access address, a frequency hopping map, a cyclic redundancy check CRC code initial value, a connected state period, or connected state timeout duration.

14. The method according to any one of claims 3 to 13, wherein when the access response message indicates that the second device succeeds in access as the role of the terminal node,
the access response message further comprises second connection information, and the second connection information comprises one or more of the following provided by the first device: a local clock, a time offset, an access address, a frequency hopping map, a CRC code initial value, a connected state period, or connected state timeout duration.

15. An information receiving method, wherein the method comprises:
receiving, by a second device, an advertising message from a first device, wherein the advertising message comprises first indication information, the first indication information indicates a role expected by the first device, and the role expected by the first device is a grant node or a terminal node.

16. The method according to claim 15, wherein the method further comprises:
when the second device determines, based on the advertising message, to request to access the first device, sending, by the second device, an access request message to the first device, wherein the access request message is used by the second device to request to access the first device; and
when the second device does not receive an access response message from the first device on a second time resource, determining, by the second device, that a connection between the second device and the first device fails, wherein the access response message indicates that the second device succeeds in access or fails in access.

17. The method according to claim 15, wherein the method further comprises:
when the second device determines, based on the advertising message, to request to access the first device, sending, by the second device, an access request message to the first device, wherein the access request message is used by the second device to request to access the first device; and
receiving, by the second device, an access response message from the first device, wherein the access response message indicates that the second device succeeds in access or fails in access.

18. The method according to claim 16 or 17, wherein the access request message comprises second indication information, the second indication information indicates a role expected by the second device, and the role expected by the second device is the grant node or the terminal node.

19. The method according to claim 18, wherein when the role expected by the second device is different from the role expected by the first device, the access response message indicates that the second device succeeds in access as the role expected by the second device.

20. The method according to claim 18, wherein when the role expected by the second device is the same as the role expected by the first device, the access response message indicates that the second device succeeds in access as the role expected by the second device.

21. The method according to claim 18, wherein when the role expected by the second device is the same as the role expected by the first device, the access response message indicates that the second device fails in access as the role expected by the second device.

22. The method according to any one of claims 15 to 17, wherein the first indication information further indicates whether the role expected by the first device is negotiable.

23. The method according to claim 22, wherein the access request message comprises third indication information, the third indication information indicates a role expected by the second device and whether the role expected by the second device is negotiable, and the role expected by the second device is the grant node or the terminal node.

24. The method according to claim 23, wherein when the role expected by the second device is different from the role expected by the first device, the access response message indicates that the second device succeeds in access as the role expected by the second device.

25. The method according to claim 23, wherein when the role expected by the second device is the same as the role expected by the first device, the role expected by the first device is non-negotiable, and the role expected by the second device is non-negotiable, the access response message indicates that the second device fails in access as the role expected by the second device; or
when the role expected by the second device is the same as the role expected by the first device, the role expected by the first device is non-negotiable, and the role expected by the second device is negotiable, the access response message indicates that the second device succeeds in access as a role other than the role expected by the second device.

26. The method according to claim 23, wherein when the role expected by the second device is the same as the role expected by the first device, the role expected by the first device is negotiable, and the role expected by the second device is non-negotiable, the access response message indicates that the second device succeeds in access as the role expected by the second device; or
when the role expected by the second device is the same as the role expected by the first device, the role expected by the first device is negotiable, and the role expected by the second device is negotiable, the access response message indicates that the second device succeeds in access as the role expected by the second device, or the access response message indicates that the second device succeeds in access as a role other than the role expected by the second device.

27. The method according to any one of claims 16 to 26, wherein when the role expected by the second device is the grant node,
the access request message further comprises first connection information, and the first connection information comprises one or more of the following provided by the second device: a local clock, a time offset, an access address, a frequency hopping map, a cyclic redundancy check CRC code initial value, a connected state period, or connected state timeout duration.

28. The method according to any one of claims 16 to 27, wherein when the access response message indicates that the second device succeeds in access as the role of the terminal node,
the access response message further comprises second connection information, and the second connection information comprises one or more of the following provided by the first device: a local clock, a time offset, an access address, a frequency hopping map, a CRC code initial value, a connected state period, or connected state timeout duration.

29. A communication apparatus, comprising a transceiver and a processor, wherein
the processor is configured to generate an advertising message, wherein the advertising message comprises first indication information, the first indication information indicates a role expected by the communication apparatus, and the role expected by the communication apparatus is a grant node or a terminal node; and
the transceiver is configured to send the advertising message to a second device.

30. The communication apparatus according to claim 29, wherein the processor is further configured to: when an access request message from the second device is not received on a first time resource, determine that a connection between the communication apparatus and the second device fails, wherein the access request message is used by the second device to request to access the communication apparatus.

31. The communication apparatus according to claim 29, wherein the transceiver is further configured to receive an access request message from the second device, wherein the access request message is used by the second device to request to access the communication apparatus; and the transceiver is further configured to send an access response message to the second device, wherein the access response message indicates that the second device succeeds in access or fails in access.

32. The communication apparatus according to claim 30 or 31, wherein the access request message comprises second indication information, the second indication information indicates a role expected by the second device, and the role expected by the second device is the grant node or the terminal node.

33. The communication apparatus according to claim 32, wherein when the role expected by the second device is different from the role expected by the first device, the access response message indicates that the second device succeeds in access as the role expected by the second device.

34. The communication apparatus according to claim 33, wherein when the role expected by the second device is the same as the role expected by the first device, the access response message indicates that the second device succeeds in access as the role expected by the second device.

35. The communication apparatus according to claim 33, wherein when the role expected by the second device is the same as the role expected by the first device, the access response message indicates that the second device fails in access as the role expected by the second device.

36. The communication apparatus according to any one of claims 29 to 31, wherein the first indication information further indicates whether the role expected by the first device is negotiable.

37. The communication apparatus according to claim 36, wherein the access request message comprises third indication information, the third indication information indicates a role expected by the second device and whether the role expected by the second device is negotiable, and the role expected by the second device is the grant node or the terminal node.

38. The communication apparatus according to claim 37, wherein when the role expected by the second device is different from the role expected by the first device, the access response message indicates that the second device succeeds in access as the role expected by the second device.

39. The communication apparatus according to claim 37, wherein when the role expected by the second device is the same as the role expected by the first device, the role expected by the first device is non-negotiable, and the role expected by the second device is non-negotiable, the access response message indicates that the second device fails in access as the role expected by the second device; or
when the role expected by the second device is the same as the role expected by the first device, the role expected by the first device is non-negotiable, and the role expected by the second device is negotiable, the access response message indicates that the second device succeeds in access as a role other than the role expected by the second device.

40. The communication apparatus according to claim 37, wherein when the role expected by the second device is the same as the role expected by the first device, the role expected by the first device is negotiable, and the role expected by the second device is non-negotiable, the access response message indicates that the second device succeeds in access as the role expected by the second device; or
when the role expected by the second device is the same as the role expected by the first device, the role expected by the first device is negotiable, and the role expected by the second device is negotiable, the access response message indicates that the second device succeeds in access as the role expected by the second device, or the access response message indicates that the second device succeeds in access as a role other than the role expected by the second device.

41. The communication apparatus according to any one of claims 30 to 40, wherein when the role expected by the second device is the grant node,
the access request message further comprises first connection information, and the first connection information comprises one or more of the following provided by the second device: a local clock, a time offset, an access address, a frequency hopping map, a cyclic redundancy check CRC code initial value, a connected state period, or connected state timeout duration.

42. The communication apparatus according to any one of claims 31 to 41, wherein when the access response message indicates that the second device succeeds in access as the role of the terminal node,
the access response message further comprises second connection information, and the second connection information comprises one or more of the following provided by the first device: a local clock, a time offset, an access address, a frequency hopping map, a CRC code initial value, a connected state period, or connected state timeout duration.

43. A communication apparatus, comprising a transceiver, wherein
the transceiver is configured to receive an advertising message from a first device, wherein the advertising message comprises first indication information, the first indication information indicates a role expected by the first device, and the role expected by the first device is a grant node or a terminal node.

44. The communication apparatus according to claim 43, wherein the communication apparatus further comprises a processor;
the transceiver is further configured to: when the processor determines, based on the advertising message, to request to access the first device, send an access request message to the first device, wherein the access request message is used by the communication apparatus to request to access the first device; and
the processor is further configured to: when the transceiver does not receive an access response message from the first device on a second time resource, determine that a connection between the communication apparatus and the first device fails, wherein the access response message indicates that the communication apparatus succeeds in access or fails in access.

45. The communication apparatus according to claim 43, wherein the communication apparatus further comprises a processor;
the transceiver is further configured to: when the processor determines, based on the advertising message, to request to access the first device, send an access request message to the first device, wherein the access request message is used by the communication apparatus to request to access the first device; and
the transceiver is further configured to receive an access response message from the first device, wherein the access response message indicates that the communication apparatus succeeds in access or fails in access.

46. The communication apparatus according to claim 44 or 45, wherein the access request message comprises second indication information, the second indication information indicates a role expected by the communication apparatus, and the role expected by the communication apparatus is the grant node or the terminal node.

47. The communication apparatus according to claim 46, wherein when the role expected by the communication apparatus is different from the role expected by the first device, the access response message indicates that the communication apparatus succeeds in access as the role expected by the communication apparatus.

48. The communication apparatus according to claim 46, wherein when the role expected by the communication apparatus is the same as the role expected by the first device, the access response message indicates that the communication apparatus succeeds in access as the role expected by the communication apparatus.

49. The communication apparatus according to claim 46, wherein when the role expected by the communication apparatus is the same as the role expected by the first device, the access response message indicates that the communication apparatus fails in access as the role expected by the communication apparatus.

50. The communication apparatus according to any one of claims 43 to 45, wherein the first indication information further indicates whether the role expected by the first device is negotiable.

51. The communication apparatus according to claim 50, wherein the access request message comprises third indication information, the third indication information indicates a role expected by the communication apparatus and whether the role expected by the communication apparatus is negotiable, and the role expected by the communication apparatus is the grant node or the terminal node.

52. The communication apparatus according to claim 51, wherein when the role expected by the communication apparatus is different from the role expected by the first device, the access response message indicates that the communication apparatus succeeds in access as the role expected by the communication apparatus.

53. The communication apparatus according to claim 51, wherein when the role expected by the communication apparatus is the same as the role expected by the first device, the role expected by the first device is non-negotiable, and the role expected by the communication apparatus is non-negotiable, the access response message indicates that the communication apparatus fails in access as the role expected by the communication apparatus; or
when the role expected by the communication apparatus is the same as the role expected by the first device, the role expected by the first device is non-negotiable, and the role expected by the communication apparatus is negotiable, the access response message indicates that the communication apparatus succeeds in access as a role other than the role expected by the communication apparatus.

54. The communication apparatus according to claim 51, wherein when the role expected by the communication apparatus is the same as the role expected by the first device, the role expected by the first device is negotiable, and the role expected by the communication apparatus is non-negotiable, the access response message indicates that the communication apparatus succeeds in access as the role expected by the communication apparatus; or
when the role expected by the communication apparatus is the same as the role expected by the first device, the role expected by the first device is negotiable, and the role expected by the communication apparatus is negotiable, the access response message indicates that the communication apparatus succeeds in access as the role expected by the communication apparatus, or the access response message indicates that the communication apparatus succeeds in access as a role other than the role expected by the communication apparatus.

55. The communication apparatus according to any one of claims 44 to 54, wherein when the role expected by the communication apparatus is the grant node,
the access request message further comprises first connection information, and the first connection information comprises one or more of the following provided by the communication apparatus: a local clock, a time offset, an access address, a frequency hopping map, a cyclic redundancy check CRC code initial value, a connected state period, or connected state timeout duration.

56. The communication apparatus according to any one of claims 44 to 55, wherein when the access response message indicates that the communication apparatus succeeds in access as the role of the terminal node,
the access response message further comprises second connection information, and the second connection information comprises one or more of the following provided by the first device: a local clock, a time offset, an access address, a frequency hopping map, a CRC code initial value, a connected state period, or connected state timeout duration.

57. A communication apparatus, comprising a memory and a processor coupled to the memory, wherein the memory is configured to store a program, the processor is configured to execute the program stored in the memory, and when the communication apparatus runs, the processor runs the program, to enable the communication apparatus to perform the information sending method according to any one of claims 1 to 14, or to enable the communication apparatus to perform the information receiving method according to any one of claims 15 to 28.

58. A computer-readable storage medium, wherein the computer-readable storage medium comprises a computer program or instructions; and when the computer program or the instructions are run on a computer, the computer is enabled to perform the information sending method according to any one of claims 1 to 14, or the computer is enabled to perform the information receiving method according to any one of claims 15 to 28.

59. A computer program product, wherein when the computer program product runs on a computer, the computer is enabled to perform the information sending method according to any one of claims 1 to 14, or the computer is enabled to perform the information receiving method according to any one of claims 15 to 28.

60. An information sending and receiving method, wherein the method comprises:
generating, by a first device, an advertising message, wherein the advertising message comprises first indication information, the first indication information indicates a role expected by the first device, and the role expected by the first device is a grant node or a terminal node;
sending, by the first device, the advertising message to a second device; and
receiving, by the second device, the advertising message from the first device.

61. A communication system, wherein the communication system comprises a first device and a second device, the first device is configured to perform the information sending method according to any one of claims 1 to 14, and the second device is configured to perform the information receiving method according to any one of claims 15 to 28.
